# EUROPEAN PATENT APPLICATION

(11) **EP 4 557 469 A1**
(43) Date of publication of application: **21.05.2025**
(21) Application number: 24213167.0
(22) Date of filing: 15.11.2024
(51) Int. Cl.: H01M 50/152, H01M 50/171, H01M 50/186

(54) **LOWER PLASTIC MEMBER AND END CAP ASSEMBLY**

(30) Priority: 17.11.2023 CN 202323131966 U; 17.11.2023 CN 202323131982 U; 22.03.2024 WO PCT/CN2024/083286
(71) Applicant: HUIZHOU EVE POWER CO., LTD, Huizhou, Guangdong 516039 (CN); Eve Power Co., Ltd., Jingmen, Hubei 448000 (CN)
(72) Inventor: ZHANG, Lei, Huizhou, Guangdong 516039 (CN)
(74) Representative: Murgitroyd & Company

(57) **Abstract**

Disclosed herein are a lower plastic member and an end cap assembly. The battery cell includes an end cap assembly. The end cap assembly includes a lower plastic member. The lower plastic member includes a body including a first surface and a second surface arranged opposite to each other. The first surface is flat and is arranged to be fitted with a top cover.

## Description

### TECHNICAL FIELD

The present application relates to the technical field of batteries, and in particular, to a lower plastic member and an end cap assembly.

### BACKGROUND

In the related art, a battery cell includes a housing formed with a housing opening, an end cap assembly arranged at the housing opening, and an electrode assembly in the housing. The end cap assembly includes a top cover and a lower plastic member arranged at a side, close to the electrode assembly, of the top cover. Multiple through holes are formed on the lower plastic member, and the multiple through holes are served as, for example, liquid injection holes for injecting electrolyte and exhaust holes arranged opposite to an explosion-proof valve on the top cover. A cavity is formed at a side, facing toward the top cover, of the lower plastic member. When injected, the electrolyte passes through the top cover and the lower plastic member and flows directly into surroundings of the electrode assembly. This results in the cavity between the lower plastic member and the top cover being left empty after the liquid injection of the battery cell is completed.

When the multiple battery cells are connected in series, some of the battery cells needs to be inverted. A part of the electrolyte in the inverted battery cells flows into a space between the lower plastic member and the top cover through the through holes on the lower plastic member and fills the cavity. As a result, the height of the electrolyte in which the electrode assembly is immersed is decreased, leading to insufficient immersion of the electrode assembly in the electrolyte and negatively affecting the performance of the electrode assembly.

### SUMMARY

The present application provides a lower plastic member, an end cap assembly, and a battery cell to solve the above technical problems.

According to a first aspect, embodiments of the present application provide a lower plastic member for a battery cell including a top cover. The lower plastic member includes a body, and the body includes a first surface and a second surface arranged opposite to each other. The first surface is flat and configured to be fitted with the top cover.

According to a second aspect, embodiments of the present application further provides an end cap assembly. The end cap assembly includes a top cover, an upper plastic member, a terminal, an electrode column, and the foregoing lower plastic member. The first surface is in contact with one side of the top cover, and the upper plastic member is in contact with another side of the top cover. The terminal is arranged on a side, away from the top cover, of the upper plastic member. One end of the electrode column passes through the lower plastic member, the top cover and the upper plastic member in sequence, and is connected to the terminal.

According to a third aspect, embodiments of the present application further provide a battery cell including the foregoing end cap assembly.

Advantageous effects of the present application are as follows.

According to the lower plastic member provided in the present application, the first surface, in contact with the top cover, of the lower plastic member is configured to be a flat structure, so that the first surface of the lower plastic member is fitted with the top cover, therefore the accumulation of electrolyte between the lower plastic member and the top cover caused by the inverted battery cells is avoided, thereby reducing the impact of the inverted battery cells on the immersion of the electrode assembly in the electrolyte, ultimately alleviating the problem of insufficient immersion of the electrode assembly caused by the inverted battery cells.

According to the end cap assembly provided in the present application, the first surface, in contact with the top cover, of the lower plastic member is configured to be a flat structure, so that the first surface of the lower plastic member is fitted with the top cover, therefore the accumulation of electrolyte between the lower plastic member and the top cover caused by the inverted battery cells is avoided, thereby reducing the impact of the inverted battery cells on the immersion of the electrode assembly in the electrolyte, ultimately alleviating the problem of insufficient immersion of the electrode assembly caused by the inverted battery cells.

According to the battery cell provided in the present application, the first surface, in contact with the top cover, of the lower plastic member is configured to be a flat structure, so that the first surface of the lower plastic member is fitted with the top cover, therefore the accumulation of electrolyte between the lower plastic member and the top cover caused by the inverted battery cell is avoided, thereby reducing the impact of the inverted battery cells on the immersion of the electrode assembly in the electrolyte, ultimately alleviating the problem of insufficient immersion of the electrode assembly caused by the inverted battery cells.

### DESCRIPTION OF DRAWINGS

FIG. 1 is a schematic structural diagram of a lower plastic member according to a first embodiment of the present application;
FIG. 2 is a sectional view taken along the line E-E in FIG. 1;
FIG. 3 is an enlarged view of part F in FIG. 2;
FIG. 4 is a schematic structural diagram of a cross-section of a first annular groove according to the first embodiment of the present application;
FIG. 5 is an enlarged view of part G in FIG. 2;
FIG. 6 is a schematic structural diagram of a cross-section of a second annular groove according to the first embodiment of the present application;
FIG. 7 is a bottom view of a lower plastic member according to the first embodiment of the present application;
FIG. 8 is a schematic structural diagram of an end cap assembly according to the first embodiment of the present application;
FIG. 9 is a sectional view taken along the line H-H in FIG. 8;
FIG. 10 is an enlarged view of part I in FIG. 9;
FIG. 11 is an enlarged view of part J in FIG. 9;
FIG. 12 is a top view of a lower plastic member according to a second embodiment of the present application;
FIG. 13 is a sectional view taken along the line A-A in FIG. 1 according to the second embodiment of the present application;
FIG. 14 is a schematic structural diagram of a lower plastic member according to the second embodiment of the present application;
FIG. 15 is an enlarged view of part B in FIG. 13;
FIG. 16 is a bottom view of a lower plastic member according to the second embodiment of the present application;
FIG. 17 is a top view of an end cap assembly according to the second embodiment of the present application;
FIG. 18 is a sectional view taken along the line C-C in FIG. 17; and
FIG. 19 is an enlarged view of part D in FIG. 18.

### Reference numerals explanations:

001: lower plastic member; 011: body; 111: first surface; 1111a: avoidance groove; 1111: first annular groove; 1112: second annular groove; 112: second surface; 113: reinforcing rib; 1131: first rib; 1132: second rib; 114: positioning rib; 115: guide rib; 116: positioning post; 117: through hole; 121: conical surface; 012: first adhesive layer; 013: second adhesive layer; 002: top cover; 021: fitting surface; 003: upper plastic member; 004: terminal; 005: electrode column; 006: sealing ring.

### DETAILED DESCRIPTION

In the description of this disclosure, unless otherwise expressly specified and limited, terms "connect", "couple", "fix" should be interpreted in a broader way. For example, it can be a fixed connection, a detachable connection, or an integrated form. It can be a mechanical connection, or an electrical connection. It can be a direct connection, an indirect connection through an intermediate medium, a communication within two components, or an interaction between two components. For persons skilled in the art, the specific meaning of the above terms in this disclosure may be understood on a case-by-case basis.

In this disclosure, unless otherwise expressly specified and limited, a first feature being "on" or "below" a second feature may indicate a direct contact between the first and second features, or an indirect contact between the first and second features which are connected by another feature therebetween. Furthermore, the first feature being "on", "above" or "over" the second feature indicates that the first feature is directly above or diagonally above the second feature, or simply indicates that the first feature is at a higher level than the second feature. The first feature being "below", "under", and "underneath" the second feature indicates that the first feature is directly below or diagonally below the second feature, or simply indicates that the first feature is at a lower level than the second feature.

In the description of the embodiments, orientation or position relationship indicated by terms "up", "down", "right" is based on the orientation or position relationship shown in the attached drawings, only for the purpose of facilitating description and simplifying operations, but not indicating or implying that the device or element referred to must have a particular orientation, or is constructed and operated in the particular orientation. Therefore, the orientation or position relationship is not limited thereto. In addition, terms "first" and "second" are used only to literally distinguish in terms of description and have no special meanings.

### The First Embodiment

This embodiment provides a lower plastic member 001 for a battery cell. The battery cell includes an end cap assembly, a housing, an electrode assembly, and a collection plate. The end cap assembly is covered on and engaged with the housing to form an accommodation chamber for storing electrolyte. The electrode assembly and the collection plate are arranged in the accommodation chamber. The end cap assembly includes a top cover, a lower plastic member, and an electrode column. Electrode plates of the electrode assembly are electrically connected to the electrode column through the collection plate. The lower plastic member is configured to isolate the collection plate from the top cover through insulation.

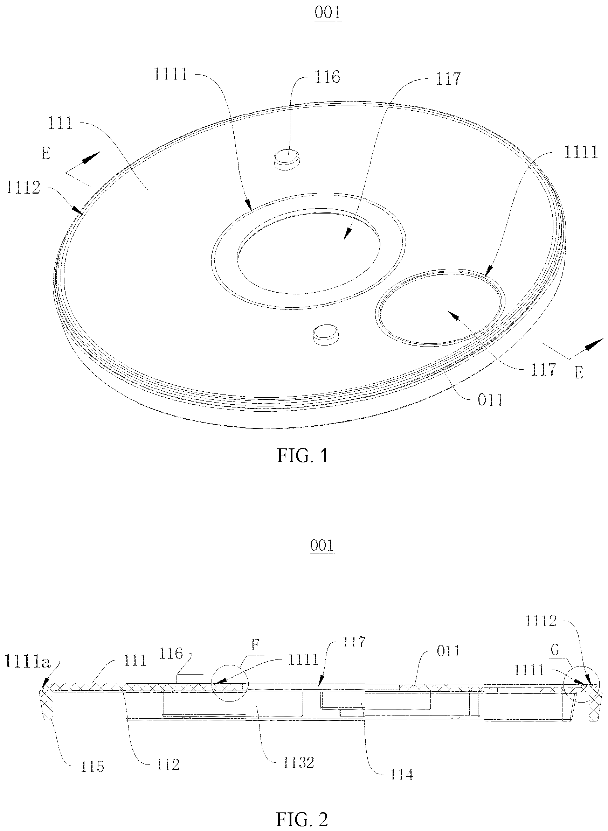

Specifically, as shown in FIG. 1, a body 011 includes a first surface 111 and a second surface 112 arranged opposite to each other. The first surface 111 is flat and configured to be fitted with the top cover.

The lower plastic member 001 is consistent with the cross section of the battery cell in shape. For example, in case that the battery cell is in a shape of a square, the lower plastic member 001 is in a shape of a rectangle. In case that the battery cell is in a shape of a cylinder, the lower plastic member 001 is in a shape of a circle. When the lower plastic member is applied to the battery cell, a surface-to-surface contact is formed between the lower plastic member 001 and the top cover once the lower plastic member 001 is fitted with the top cover, thereby the electrolyte is prevented from being stored between the lower plastic member 001 and the top cover. Further, one or more through holes 117 penetrating through the first surface 111 and the second surface 112 are formed in the body 011. The through holes 117 include, but are not limited to, a liquid injection hole, an exhaust hole for an explosion-proof valve, and a mounting hole for the electrode column. As for the two through holes 117 shown in FIG. 1, the through hole 117 at a center of the lower plastic member 001 is a mounting hole for the electrode column, and the other through hole 117 is an exhaust hole for the explosion-proof valve.

For example, a roughness of the first surface 111 is not greater than Ra3.2. Specifically, the roughness of the first surface 111 is Ra0.8.

In the present embodiment, the first surface 111, in contact with the top cover, of the lower plastic member 001 is configured to be a flat structure, so that the first surface 111 of the lower plastic member 001 is fitted with the top cover, therefore, the accumulation of electrolyte between the lower plastic member 001 and the top cover caused by the inverted battery cells is avoided, thereby reducing the impact of the inverted battery cells on the immersion of the electrode assembly in the electrolyte, ultimately alleviating the problem of insufficient immersion of the electrode assembly caused by the inverted battery cell.

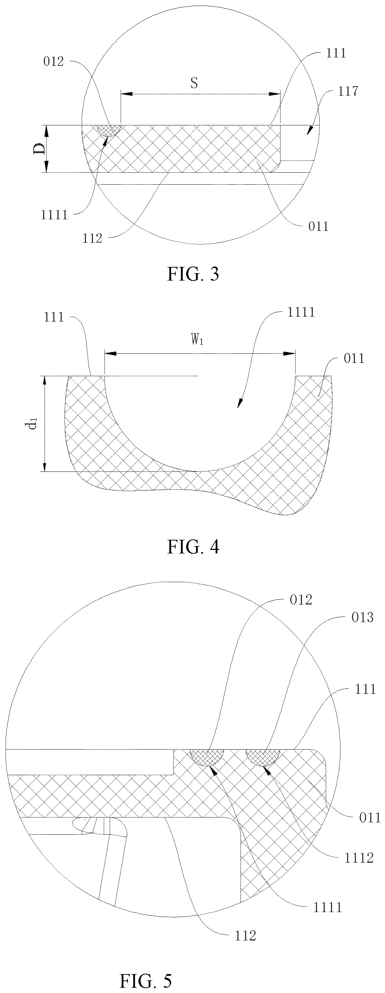

Further, as shown in FIG. 2 and FIG. 3, the lower plastic member further includes one or more first adhesive layers 012. Each first adhesive layer 012 is arranged at the first surface 111 and surrounds a periphery of each through hole 117. Two sides of each first adhesive layer 012 are configured to be glued to the top cover and the body 011.

It will be appreciated that when the lower plastic member 001 is applied to the battery cell, a periphery of the lower plastic member 001 abuts against an inner wall of the housing of the battery cell to form a sealing fit. Therefore, in order to improve the sealing between the top cover and the lower plastic member, the first adhesive layers 012 are arranged to surround at least peripheries of the through holes 117.

In addition, corresponding to the structure of the through hole 117, the first adhesive layer 012 is of an annular structure. In case that the lower plastic member 001 includes multiple through holes 117, one first adhesive layer 012 is arranged to surround the periphery of each of the through holes 117. The first adhesive layer 012 is made of glue that does not react with the electrolyte. For example, the adhesive of the glue is one or more of PVDF powder, styrenebutadiene rubber, polyacrylic acid, polyacrylonitrile, and polyurethane. Specifically, the first adhesive layer 012 is made of a sealant from HLi-T10 series.

In the present embodiment, one first adhesive layer 012 is arranged to surround the periphery of each through hole 117, and two sides of the first adhesive layer 012 are glued to the body 011 and the top cover. Therefore, on one hand, a fitting part between the body 011 and the top cover is sealed and isolated from the through hole 117 by the first adhesive layer 012, so that, the electrolyte is avoided from flowing between the lower plastic member 001 and the top cover when the battery cells are inverted, thereby reducing the impact of the inverted battery cells on the immersion of the electrode assembly in the electrolyte; on the other hand, the lower plastic member 001 is glued to a side of the top cover through the first adhesive layer 012, so that the stability of the connection between the lower plastic member 001 and the top cover is improved, thereby avoiding the lower plastic member 001 from shaking relative to the top cover.

Further, as shown in FIG. 1 and FIG. 3, one or more first annular grooves 1111 are formed at the first surface 111 and surround the through holes 117. Each first adhesive layer 012 is arranged in one first annular groove 1111, and a side, away from the second surface 112, of the first adhesive layer 012 is coplanar with the first surface 111.

It will be appreciated that the first adhesive layers 012 are initially in a form of a fluid, in particular glue, and are filled in the first annular grooves 1111. Once the lower plastic member 001 is fitted with the top cover, the glue is brought to be in contact with the top cover. After the glue is cured to form an adhesive layer, the lower plastic member 001 is bonded to the top cover to form a one-piece structure, so that a fitting part between the lower plastic member 001 and the top cover is sealed and isolated from the through holes 117. Further, in case that the lower plastic member 001 includes multiple through holes 117, one first annular groove 1111 is arranged to surround the periphery of each of the through holes 117, and one first adhesive layer 012 is arranged in each annular groove.

For example, each first annular groove 1111 is arranged coaxially with a corresponding through hole 117.

In the present embodiment, with the arrangement of the first annular grooves 1111, the first adhesive layers 012 are arranged in the first annular grooves 1111. Therefore, on one hand, the amount of glue is controlled to avoid waste of glue; on the other hand, the first surface 111 is maintained to be fitted with the top cover without any gaps between the top cover and the first surface 111 due to the arrangement of the first adhesive layers 012.

Further, as shown in FIG. 4, in a thickness direction of the lower plastic member 001, a cross section of each first annular groove 1111 is in a shape of any one of the following: a semicircle, a letter V, a letter U, and a rectangle. It will be appreciated that the cross section is a section of the first annular groove 1111 along a plane where the axial direction and one radial direction of the lower plastic member 001 are located. Specifically, the cross section of each first annular groove 1111 is in a shape of a semicircle.

In the present embodiment, the cross section of the first annular grooves 1111 is set to be of a semicircular structure, so that on one hand, the first annular grooves 1111 are sufficiently filled with the glue , areas without the glue are avoided, thereby improving the sealing between the lower plastic member 001 and the top cover; on the other hand, through the first annular grooves 1111 with the semicircular structure, the uniformity of glue distribution is improved, which is beneficial for avoiding the concentration of glue in a certain area.

Further, as shown in FIG. 3 and FIG. 4, a distance D between the first surface 111 and the second surface 112, and a depth d₁ of each first annular groove 1111 satisfies: 10%D ≤ d₁ ≤ 50%D.

It will be appreciated that d₁ is, but is not limited to, 10%D, 20%D, 40%D, and 50%D.

For example, in case that D = 4 mm, 0.4 mm ≤ d₁ ≤ 2 mm. Specifically, d₁ is, but is not limited to, 0.4 mm, 0.5 mm, 0.8 mm, 1 mm, 1.1 mm, 1.2 mm, 1.35 mm, 1.47 mm, 1.6 mm, 1.7 mm, 1.8 mm, 1.9 mm, 2 mm.

In the present embodiment, the depth of the first annular grooves 1111 is defined as described above, so that the depth of the first annular grooves 1111 is great enough to achieve a sealing connection between the lower plastic member 001 and the top cover through the first adhesive layers 012; and the strength of the lower plastic member 001 is ensured, so that the situation where the strength of the lower plastic member 001 does not meet the working condition requirements due to a great depth of the first annular grooves 1111 is avoided.

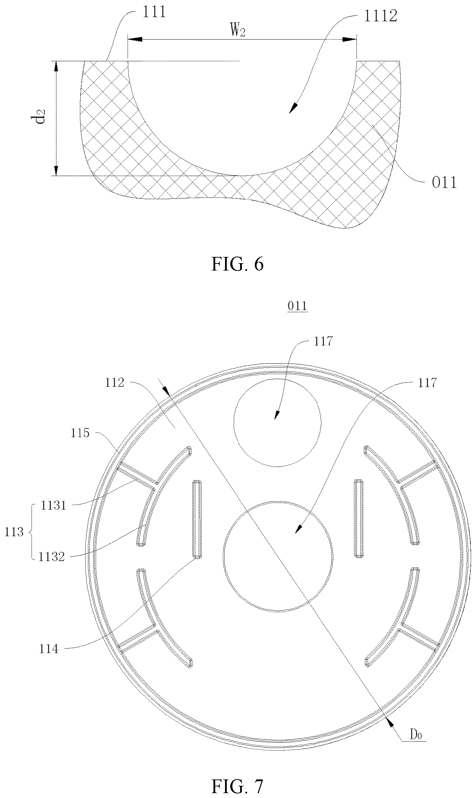

Further, as shown in FIG. 4 and FIG. 7, a diameter D₀ of the lower plastic member 001, and a width dimension W₁ of the first annular groove 1111 in a radial direction of the lower plastic member 001 satisfies: 1.5%D₀ ≤ W₁ ≤ 6.5%D₀. It will be appreciated that the diameter D₀ of the lower plastic member 001 is the maximum diameter of the lower plastic member 001. W₁ is, but is not limited to, 1.5%D₀, 2%D₀, 4%D₀, and 6.5%D₀. For example, in case that D₀ = 30 mm, 0.45 mm ≤ W₁ ≤ 1.95 mm. Specifically, W₁ is, but is not limited to, 0.45 mm, 0.5 mm, 0.6 mm, 0.7 1mm, 0.8 mm, 0.9 mm, 1 mm, 1.1 mm, 1.2 mm, 1.36 mm, 1.4 mm, 1.5 mm, 1.6 mm, 1.7 mm, 1.8 mm, and 1.95 mm.

In the present embodiment, the width of the first annular grooves 1111 is defined as described above, so that the width of the first annular grooves 1111 is large enough, which is beneficial for achieving a sealing connection between the lower plastic member 001 and the top cover through the first adhesive layer 012; and the strength of the lower plastic member 001 is ensured, so that the situation where the strength of the lower plastic member 001 does not meet the working condition requirements due to a great depth of the first annular grooves 1111 is avoided.

Further, as shown in FIG. 3, a distance S between an inner periphery of each first annular groove 1111 and a periphery of each through hole 117 surrounded by the first annular groove 1111 satisfies: 1 mm ≤ S≤ 5 mm. For example, S is, but is not limited to, 1 mm, 1.15 mm, 1.3 mm, 1.5 mm, 1.6 mm, 1.7 mm, 1.88 mm, 1.9 mm, 2 mm, 2.1 mm, 2.3 mm, 2.9 mm, 3 mm, 3.62 mm, 4 mm, 4.2 mm, 4.5 mm, 4.8 mm, 4.9 mm, and 5 mm.

In the present embodiment, the distance S between an inner periphery of each first annular groove 1111 and the periphery of the corresponding through hole 117 is defined, therefore, on one hand, the glue is avoided from overfilling from the first annular grooves 1111 and contaminating the electrode column or the explosion-proof valve due to a small distance S; on the other hand, the electrolyte is avoided from flowing between the lower plastic member 001 and the top cover due to a large distance S.

Further, as shown in FIG. 5, a second adhesive layer 013 is further arranged at the lower plastic member 001. The second adhesive layer 013 is arranged around a periphery of the first surface 111, and two sides of the second adhesive layer 013 are configured to be glued to the top cover and the body 011. It will be appreciated that the second adhesive layer 013 is of an annular structure, and the material of the second adhesive layer 013 is the same as the material of the first adhesive layer 012. For example, the second adhesive layer 013 is made of a sealant from HLi-T10 series.

In the present embodiment, the second adhesive layer 013 is arranged around the periphery of the first surface 111, and two sides of the second adhesive layer 013 are glued to the body 011 and the top cover. Therefore, on one hand, a fitting part between the body 011 and the top cover is sealed and isolated from the periphery of the lower plastic member 001 through the second adhesive layer 013, so that the electrolyte is avoided from flowing into a gap between the lower plastic member 001 and the top cover when the battery cells are inverted; on the other hand, the lower plastic member 001 is glued to a side of the top cover through the second adhesive layer 013, so that the stability of the connection between the lower plastic member 001 and the top cover is improved, thereby avoiding the lower plastic member 001 from shaking relative to the top cover.

Further, as shown in FIG. 5, a second annular groove 1112 is arranged around the periphery of the first surface 111, the second adhesive layer 013 is arranged in the second annular groove 1112, and a side, away from the second surface 112, of the second adhesive layer 013 is coplanar with the first surface 111. It will be appreciated that, as the first adhesive layer 012, the second adhesive layer 013 is initially in a form of a fluid and is filled in the second annular groove 1112. Once the lower plastic member 001 is fitted with the top cover, the glue is brought to be in contact with the top cover. After the glue is cured to form the second adhesive layer 013, the lower plastic member 001 is bonded to the top cover to form a one-piece structure, so that a fitting part between the body 011 and the top cover is sealed and isolated from the through holes 117. For example, the second annular groove 1112 is arranged coaxially with the lower plastic member 001.

In the present embodiment, the second annular groove 1112 is arranged so that the second adhesive layer 013 is arranged in the second annular groove 1112. Therefore, on one hand, the amount of glue is controlled to avoid waste of glue; on the other hand, the first surface 111 is maintained to be fitted with the top cover without any gaps between the top cover and the first surface 111 due to the arrangement of the second adhesive layer 013.

Further, in the thickness direction of the lower plastic member 001, a cross section of the second annular groove 1112 is in a shape of any one of the following: a semicircular, a letter V, a letter U, and a rectangle. It will be appreciated that, as the first annular groove 1111, the cross section of the second annular groove 1112 is a section of the second annular groove 1112 along a plane where the axial direction and one radial direction of the lower plastic member 001 are located. Specifically, the cross section of the second annular groove 1112 is in a shape of a semicircular.

In the present embodiment, the cross section of the second annular groove 1112 is set to be of a semicircular structure, so that on one hand, the second annular groove 1112 is sufficiently filled with the glue, areas without the glue are avoided, thereby improving the sealing between the lower plastic member 001 and the top cover; on the other hand, through the second annular groove 1112 with the semicircular structure, the uniformity of glue distribution is improved, which is beneficial for avoiding the concentration of glue in a certain area.

Further, as shown in FIG. 6, the distance D between the first surface 111 and the second surface 112, and a depth d₂ of the second annular groove 1112 satisfies: 10%D ≤ d₂ ≤ 50%D. It will be appreciated that d₂ is, but is not limited to, 10%D, 20%D, 40%D, and 50%D. For example, in case that D = 4 mm, 0.4 mm ≤ d₂ ≤ 2 mm. Specifically, d₂ is, but is not limited to, 0.4 mm, 0.47 mm, 0.5 mm, 0.6 mm, 0.7 mm, 0.8 mm, 0.9 mm, 1 mm, 1.15 mm, 1.2 mm, 1.39 mm, 1.4 mm, 1.5 mm, 1.67 mm, 1.68 mm, 1.7 mm, 1.8 mm, 1.9 mm, and 2 mm.

In the present embodiment, the depth of the second annular groove 1112 is defined as described above, so that the depth of the second annular groove 1112 is great enough to achieve a sealing connection between the lower plastic member 001 and the top cover through the second adhesive layer 013; and the strength of the lower plastic member 001 is ensured, so that the situation where the strength of the lower plastic member 001 does not meet the working condition requirements due to a great depth of the second annular groove 1112 is avoided.

Further, as shown in FIG. 6, the diameter D₀ of the lower plastic member 001 is, and a width dimension W₂ of the second annular groove 1112 in the radial direction of the lower plastic member 001 satisfies: 1.5%D₀ ≤ W ₂≤ 6.5%D₀. It will be appreciated that W₂ is, but is not limited to, 1.5%D₀, 2%D₀, 4%D₀, and 6.5%D₀. For example, in case that D₀ = 30 mm, 0.45 mm ≤ W₂ ≤ 1.95 mm. Specifically, W₂ is, but is not limited to, 0.45 mm, 0.5 mm, 0.56 mm, 0.6 mm, 0.7 mm, 0.8 mm, 0.9 mm, 1 mm, 1.1 mm, 1.2 mm, 1.55 mm, 1.6 mm, 1.89 mm, and 1.95 mm.

In the present embodiment, the width of the second annular groove 1112 is defined as described above, so that: the depth of the second annular groove 1112 is great enough to achieve a sealing connection between the lower plastic member 001 and the top cover through the second adhesive layer 013; and the strength of the lower plastic member 001 is ensured, so that the situation where the strength of the lower plastic member 001 does not meet the working condition requirements due to a great depth of the second annular groove 1112 is avoided.

Further, referring to FIG. 7, one or more positioning ribs 114 are arranged on the second surface 112, and the positioning ribs 114 are configured to be snap-fitted with a collection plate of the battery cell. The collection plate is positioned by the positioning ribs 114 to prevent the collection plate from rotating.

Further, referring to FIG. 1, multiple positioning posts 116 are arranged on the first surface 111, and the positioning posts 116 are configured to be inserted into the top cover. For example, the positioning posts 116 are integrally formed with the body 011, and the positioning posts 116 are in a shape of a cylinder.

In the present embodiment, the positioning posts 116 are arranged on the first surface 111 and configured to be inserted into the top cover, so that rotation of the lower plastic member 001 relative to the top cover is avoided, thereby improving the positional stability of the lower plastic member 001 relative to the top cover, and enhancing the structural stability of the battery cells.

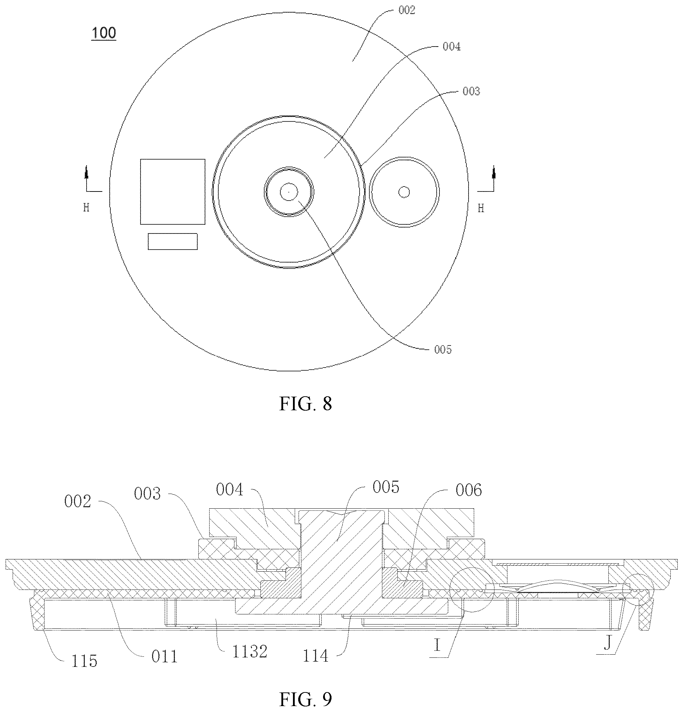

As shown in FIG. 8 and FIG. 9, the present embodiment further provides an end cap assembly.

Specifically, the end cap assembly 100 includes a top cover 002, an upper plastic member 003, a terminal 004, an electrode column 005, and the aforementioned lower plastic member 001. The first surface 111 is in contact with one side of the top cover 002, and the upper plastic member 003 is in contact with another side of the top cover 002. The terminal 004 is arranged on a side, away from the top cover 002, of the upper plastic member 003. One end of the electrode column 005 passes through the lower plastic member 001, the top cover 002, and the upper plastic member 003 in sequence, and is connected to the terminal 004. Specifically, the electrode column 005 is inserted into the terminal 004.

It will be appreciated that a hole in the terminal 004 into which the electrode column 005 is inserted is configured as a stepped hole. A hole body with a large diameter of the stepped hole is arranged on a side, away from the top cover 002, of the terminal 004. The electrode column 005 is configured as a stepped shaft. A shaft body with a large diameter of the stepped shaft is arranged on a side, away from the top cover 002, of the lower plastic member 001, and an end of a shaft body with a small diameter of the stepped shaft passes through the lower plastic member 001, the top cover 002, the upper plastic member 003, and the stepped hole in sequence. When the shaft body with a small diameter is pressed down, the shaft body with a small diameter expands radially towards a hole wall of the hole body with a large diameter, so that the electrode column 005 is engaged with a stopper at a hole bottom of hole body with a large diameter, thereby the lower plastic member 001, the top cover 002, the upper plastic member 003, and the terminal 004 are riveted together through the electrode column 005. In addition, a sealing ring 006 is arranged between the electrode column 005 and the top cover 002.

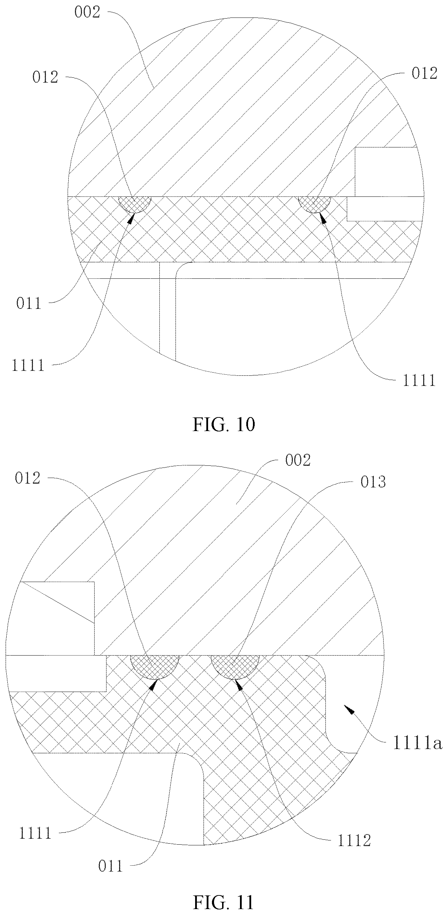

According to the foregoing embodiments, both the first adhesive layers 012 and the second adhesive layer 013 are glued to the top cover 002, as shown in FIG. 10 and FIG. 11. In

FIG. 10, the first adhesive layer 012 on the left side is arranged around the through hole 117, through which the electrode column 005 penetrates, in the lower plastic member 001, and the first adhesive layer 012 on the right side is arranged around the through hole 117 for exhausting gas in the lower plastic member 001. In FIG. 11, the first adhesive layer 012 is arranged around the through hole 117 for exhausting gas in the lower plastic member 001, and the second adhesive layer 013 is arranged around the periphery of the first surface 111.

In the present embodiment, the first surface 111 of the lower plastic member 001 is designed to be flat, the first annular grooves 1111 and the second annular groove 1112 are arranged at the first surface 111, and the glue is applied into the annular grooves. Further, the lower plastic member 001 is riveted to the top cover 002 so that the lower plastic member 001 is adhered to the top cover 002, thereby the lower plastic member 001 and the top cover 002 are sealed and isolated from the outside, preventing the electrolyte from entering a space between the lower plastic member 001 and the top cover 002. As a result, no liquid is stored or accumulated between the lower plastic member 001 and the top cover 002, thereby reducing the impact of the inverted battery cells on the immersion of the electrode assembly in the electrolyte, and ultimately alleviating the problem of insufficient immersion of the electrode assembly caused by the inverted battery cells.

### The Second Embodiment

Generally, when the end cap assembly is pressed into the housing, the electrode assembly is compressed by the lower plastic member 001 in an axial direction of the battery cell. Meanwhile, a reaction force is applied to the lower plastic member 001 by the electrode assembly. Since two sides of the lower plastic member 001 are limited by the top cover and the electrode assembly, the lower plastic member 001 is radially expanded due to axial compression, thereby the housing opening is compressed and deformed, which is adverse to the welding between the housing and the top cover.

Based on this, the present embodiment provides a lower plastic member 001 on the basis of the first embodiment. The lower plastic member 001 in the present embodiment differs from the lower plastic member 001 according to the first embodiment in the following aspects:

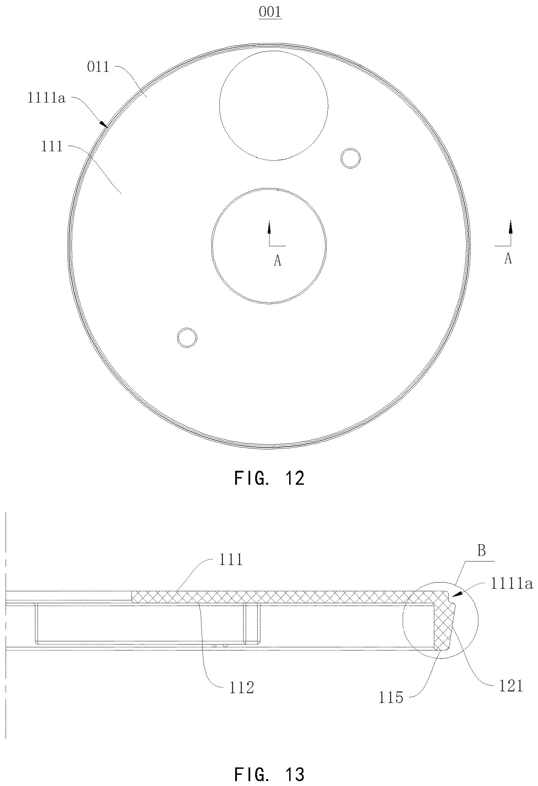

As shown in FIG. 12 and FIG. 13, the first surface 111 is arranged to be in contact with the top cover 002. An avoidance groove 1111a is formed along a periphery of the first surface 111. The avoidance groove1111a extends along at least a portion of the periphery of the first surface 111. It will be appreciated that the avoidance groove 1111a extends along the portion of the periphery of the first surface 111, or extends along the entire periphery to form an annular groove. In addition, the lower plastic member 001 is an insulating member for insulating the electrode assembly from the top cover 002. The lower plastic member 001 is in consistent with the cross section of the battery cell in shape. For example, in case that the battery cell is in a shape of a square, the lower plastic member 001 is in a shape of a rectangle. In case that the battery cell is in a shape of a cylinder, the lower plastic member 001 is in a shape of a circle.

In the present embodiment, the avoidance groove 1111a is formed along the periphery of the first surface 111, so that there is a distance between the lower plastic member 001 and the top cover 002 at the periphery, which provides a space for axial deformation for the periphery of the lower plastic member 001. Thus, in case that the end cap assembly is pressed into the housing, the lower plastic member 001 applies an axial compression to the electrode assembly. In response to the axial compression, an axial reaction force on the lower plastic member is produced by the electrode assembly, so that the avoidance groove 1111a formed along the periphery of the lower plastic member 001 are compressed, thereby the radial deformation of the lower plastic member 001 is reduced, and the compression force on the housing opening when the lower plastic member 001 is pressed into the housing is reduced, and finally the deformation of the housing opening is decreased, and the welding between the housing and the top cover 002 is facilitated.

In addition, in case that the lower plastic member 001 is assembled in place, the deformation of the lower plastic member 001 is restored, and is kept to be abutted against an inner wall of the housing to seal the interior of the housing. Meanwhile, the lower plastic member 001 is misaligned with the housing opening along the axial direction of the battery cell. Therefore, the housing opening would not be compressed by the lower plastic member 001 when the lower plastic member is assembled in place. Once the lower plastic member 001 is assembled in place, a gap between the periphery of the first surface 111 and the welding surface of the top cover 002 is provided by the avoidance groove 1111a, so that the influence of the high temperature caused by the welding between the top cover 002 and the housing on the lower plastic member 001 is reduced.

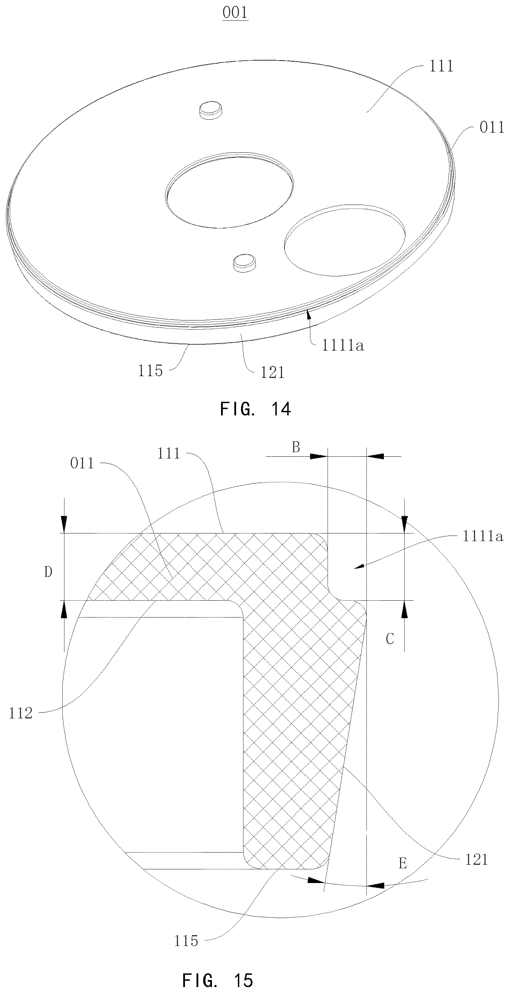

Referring to FIG. 14, optionally, the avoidance groove 1111a is configured as an annular groove. It will be appreciated that the avoidance groove 1111a is configured as an annular groove extending 360 degrees along the periphery of the first surface 111. For example, the avoidance groove 1111a is arranged coaxially with the lower plastic member 001.

In the present embodiment, the avoidance groove 1111a is configured as an annular groove so that, when the end cap assembly is pressed into the housing, an axial reaction force on the lower plastic member produced by the electrode assembly makes the avoidance groove 1111a to be compressed by the periphery of the lower plastic member 001, thereby reducing the overall radial deformation of the lower plastic member 001 and further reducing the compression force on the housing opening when the lower plastic member 001 is pressed into the housing. As a result, the deformation of the housing opening is further decreased.

In addition, a gap between the entire periphery of the first surface 111 and the entire welding surface of the top cover 002 is provided by the avoidance groove 1111a, so that the influence of the high temperature caused by the welding between the top cover 002 and the housing on the lower plastic member 001 is further reduced.

Referring to FIG. 15, further, the avoidance groove 1111a includes a first groove wall and a second groove wall. A side of the first groove wall is connected to the first surface 111, another side is connected to a side of the second groove wall, and another side of the second groove wall is connected to an outer peripheral surface of the body 011. At least one of the following is rounded: a connection part between the first surface and the first groove wall, a connection part between the first groove wall and the second groove wall, and a connection part between the second groove wall and the outer peripheral surface of the body. It will be appreciated that the avoidance groove 1111a is in a shape of a letter V. For example, the first groove wall is perpendicular to the second groove wall. The first groove wall is configured as a cylindrical arc-shaped surface whose axis is aligned with the axis of the lower plastic member 001. The axis of the lower plastic member 001 is perpendicular to the second groove wall. Further, all three connection parts mentioned above are rounded.

In the present embodiment, based on the foregoing arrangement, on one hand, a space for the axial deformation of the periphery of the lower plastic member 001 is provided by the avoidance groove 1111a; on the other hand, the avoidance groove 1111a is simple in overall structure and easy to manufacture.

Further, the above connection parts are rounded, so that a stress at the connection parts is reduced when the periphery of the lower plastic member 001 is axially deformed, thereby improving the stress state of the lower plastic member 001 and prolonging the service lifespan of the lower plastic member 001.

Referring to FIG. 15, further, a first dimension B of the avoidance groove 1111a in the radial direction of the lower plastic member 001 satisfies: 0 < B ≤ 2 mm.

It will be appreciated that the first dimension B is, but is not limited to, 0.1 mm, 0.2 mm, 0.26 mm, 0.3 mm, 0.4 mm, 0.5 mm, 0.6 mm, 0.7 mm, 0.77 mm, 0.8 mm, 0.9 mm, 1 mm, 1.1 mm, 1.2 mm, 1.3 mm, 1.4 mm, 1.45 mm, 1.5 mm, 1.6 mm, 1.7 mm, 1.8 mm, 1.9 mm, 1.95 mm, and 2 mm. A minimum value of the first dimension B is set to vary according to different processing accuracies. For example, in case that the lower plastic member 001 formed by a mold has a minimum precision of 0.05 mm, the minimum value of the first dimension B is 0.05 mm. In case that the lower plastic member 001 formed by a mold has a minimum precision of 0.1 mm, the minimum value of the first dimension B is 0.1 mm.

In the present embodiment, the first dimension B is defined so that, on one hand, a space for axial deformation is provided for the periphery of the lower plastic member 001; on the other hand, the strength of the lower plastic member 001 is ensured, so that the situation where the strength at the periphery of the lower plastic member 001 is low due to a great size of the first dimension B is avoided. As a result, the lower plastic member 001 is made to meet the working condition requirements.

For example, 0.1 mm ≤ B ≤ 1 mm. Further, 0.1 mm ≤ B ≤ 0.5 mm.

Referring to FIG. 15, further, a second dimension C of the avoidance groove 1111a in the axial direction of the lower plastic member 001 satisfies: 0 < C ≤ 2 mm.

It will be appreciated that the second dimension C does not penetrate through the lower plastic member 001 in order to ensure the structure of the avoidance groove 1111a. Therefore, a maximum value of the second dimension C is set to vary according to different sizes of the lower plastic member 001. The second dimension C is, but is not limited to, 0.1 mm, 0.3 mm, 0.5 mm, 0.8 mm, 1.2 mm, 1.5 mm, 1.6 mm, 1.7 mm, 1.8 mm, 1.9 mm, 1.95 mm, and 2 mm. A minimum value of the second dimension C is set to vary according to different processing accuracies. For example, in case that the lower plastic member 001 formed by a mold has a minimum precision of 0.05 mm, the minimum value of the second dimension C is 0.05 mm. In case that the lower plastic member 001 formed by a mold has a minimum precision of 0.1 mm, the minimum value of the second dimension C is 0.1 mm. For example, 0.1 mm ≤ C ≤ 1 mm.

In the present embodiment, the second dimension C is defined so that, on one hand, a space for axial deformation is provided for the periphery of the lower plastic member 001; on the other hand, the strength of the lower plastic member 001 is ensured, so that the situation where the strength at the periphery of the lower plastic member 001 is low due to a great size of the second dimension C is avoided. As a result, the lower plastic member 001 meets the working condition requirements.

Referring to FIG. 15, further, along the periphery of the body 011, a guide rib 115 is formed on the second surface 112. The outer peripheral surface of the guide rib 115 is configured as a conical surface 121, and an end with a large diameter of the conical surface 121 is connected to the second surface 112.

It will be appreciated that when the end cap assembly is pressed into the housing, an end with a small diameter of the conical surface 121 faces toward the interior of the battery cell.

In addition, the distance D between the first surface 111 and the second surface 112 satisfies: C ≤ D.

In the present embodiment, the outer peripheral surface of the guide rib 115 is arranged as the conical surface 121, so that the end cap assembly is guided by the conical surface 121 of the guide rib 115 when the end cap assembly is inserted into the housing, and a gap is formed between the conical surface 121 and the inner wall of the housing, thereby a space for radial deformation of the guide rib 115 is provided, and the guide rib 115 is prevented from compressing the housing opening.

Referring to FIG. 15, further, an inclination angle E of the conical surface 121 satisfies: 5° ≤ E ≤ 60°.

It will be appreciated that the inclination angle E is, but is not limited to, 1°, 5°, 10°, 15°, 18°, 20°, 25°, 29°, 30°, 31°, 33.6°, 36°, 37°, 40°, 42°, 45°, 48°, 50°, 52°, 55°, 56.2°, 59°, and 60°. For example, 5° ≤ E ≤ 45°. Further, 15° ≤ E ≤ 30°.

In the present embodiment, the inclination angle E is defined so that a space is provided for the radial deformation of the guide rib 115, thereby the lower plastic member 001 is avoided from compressing the housing opening when abutted against the electrode assembly. Moreover, the strength of the guide rib 115 is ensured, the situation where the strength of the guide rib 115 is low due to a large size of the inclination angle E is avoided, so that the lower plastic member 001 meets the working condition requirements.

Referring to FIG. 15, further, an end, close to the body 011, of the guide rib 115 at least partially forms a groove wall of the avoidance groove 1111a.

In the present embodiment, the guide rib 115 is partially formed into the groove wall of the avoidance groove 1111a, so that a thickness of the lower plastic member 001 at the periphery is reduced, thereby the strength at the periphery is reduced. As a result, in case that the end cap assembly is pressed into the housing, it is beneficial for the periphery of the lower plastic member 001 to be compressed by the avoidance groove 1111a.

Further, the second surface 112 is coplanar with an end, close to the body 011, of the guide rib 115.

It will be appreciated that the second groove wall is formed on the guide rib 115.

In the present embodiment, the second surface 112 is coplanar with one end, close to the body 011, of the guide rib 115, so that the lower plastic member 001 is simple in structure and is easy to manufacture.

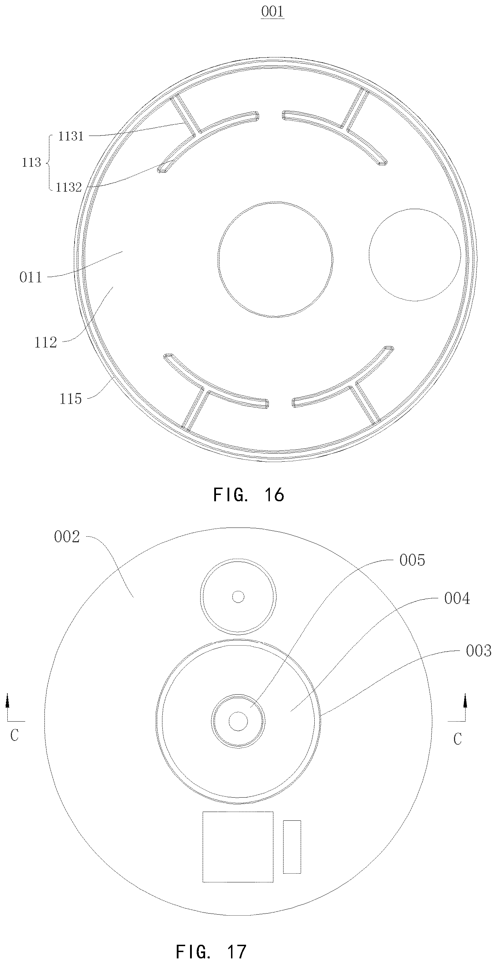

Referring to FIG. 16, further, multiple reinforcing ribs 113 are arranged on the second surface 112. The reinforcing ribs 113 are integrally formed with the body 011, for example, by integrated injection molding. Four reinforcing ribs 113 are arranged at intervals along the periphery of the lower plastic member 001. Specifically, the reinforcing ribs 113 include a first rib 1131 and a second rib 1132. The first rib 1131 is arranged to extend along a radial direction of the lower plastic member 001. The second rib 1132 is in a shape of an arc. An inwardly recessed surface of the second rib faces towards an axial direction of the lower plastic member 001. An outwardly protruding surface of the second rib is connected to an end, close to the axial direction of the lower plastic member 001, of the first rib 1131.

In the present embodiment, the reinforcing ribs 113 are arranged so that the lower plastic member 001 is reinforced in the radial and circumferential directions, thereby the overall strength of the lower plastic member 001 is enhanced. Moreover, with the arrangement of the reinforcing ribs 113, the elasticity of the lower plastic member 001 is increased to make it more elastic for abutting tightly against the electrode assembly so as to limit the movement of the electrode assembly. The reinforcing ribs 113 are not connected to each other in a plane to avoid forming a semi-closed structure, which is beneficial for the electrolyte to smoothly flow out after entering the reinforcing ribs 113 without affecting the flow of electrolyte.

The remaining structures of the lower plastic member 001 in this embodiment are the same as those in the first embodiment, and details are not redundantly described.

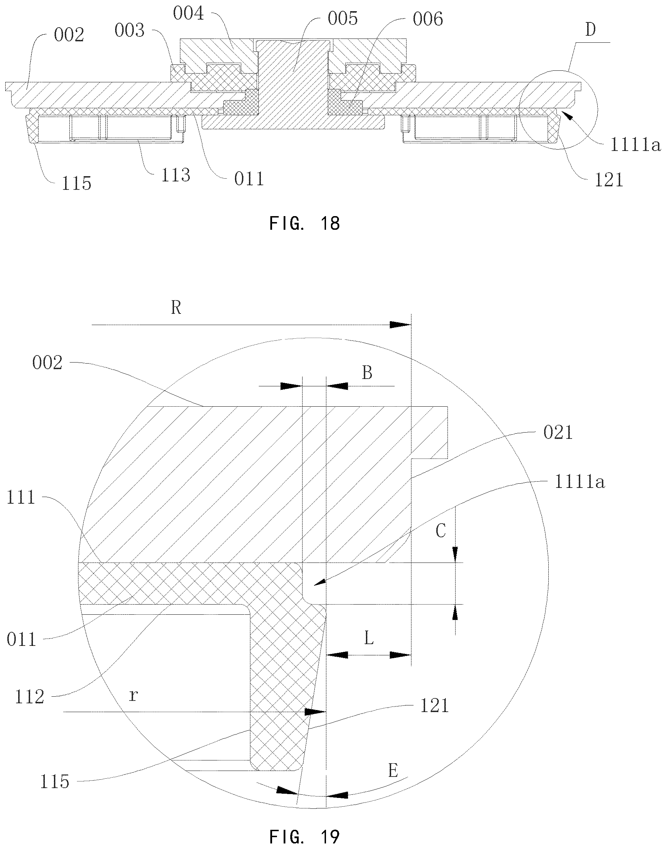

Referring to FIG. 17 and FIG. 18, accordingly, an embodiment of the present application further provides an end cap assembly including a top cover 002, an upper plastic member 003, a terminal 004, an electrode column 005, and the foregoing lower plastic member 001. The first surface 111 is in contact with one side of the top cover 002, and the upper plastic member 003 is in contact with another side of the top cover 002. The terminal 004 is arranged on a side, away from the top cover 002, of the upper plastic member 003. One end of the electrode column 005 passes through the lower plastic member 001, the top cover 002, and the upper plastic member 003 in sequence, and is connected to the terminal 004. Specifically, one end of the electrode column 005 is inserted into the terminal 004.

It will be appreciated that a hole in the terminal 004 into which the electrode column 005 is inserted is configured as a stepped hole. A hole body with a large diameter of the stepped hole is arranged on a side, away from the top cover 002, of the terminal 004. The electrode column 005 is configured as a stepped shaft. A shaft body with a large diameter of the stepped shaft is arranged on a side, away from the top cover 002, of the lower plastic member 001, and an end of a shaft body with a small diameter of the stepped shaft passes through the lower plastic member 001, the top cover 002, the upper plastic member 003, and the stepped hole in sequence. When the shaft body with a small diameter is pressed down, the shaft body with a small diameter expands radially towards a hole wall of the hole body with a large diameter, so that the electrode column 005 is engaged with a stopper at a bottom of hole body with a large diameter, thereby the lower plastic member 001, the top cover 002, the upper plastic member 003, and the terminal 004 are riveted together through the electrode column 005. A sealing ring 006 is arranged between the electrode column 005 and the top cover 002.

In the present embodiment, when the end cap assembly is pressed into the housing, the electrode assembly is compressed by the lower plastic member 001and a reaction force is applied to the lower plastic member 001 by the electrode assembly, so that the lower plastic member 001 is axially compressed, whereby the periphery of the lower plastic member 001 is deformed towards the avoidance groove 1111a, that is, the radial expansion of the lower plastic member 001 after being compressed is converted into axial deformation. Therefore, the end cap assembly is avoided from compressing the housing opening when the end cap assembly is inserted into the housing, which is beneficial for the smooth welding between the housing and the top cover 002.

Referring to FIG. 18 and FIG. 19, further, the top cover 002 includes a fitting surface 021. The distance L between the fitting surface 021 and the outer peripheral surface of the lower plastic member 001 satisfies: 0 ≤ L ≤ 3 mm.

It will be appreciated that the fitting surface 021 is a surface on the top cover 002 that is fitted with the inner wall of the housing at the periphery. The distance L is, but is not limited to, 0.1 mm, 0.3 mm, 0.4 mm, 0.46 mm, 0.5 mm, 0.6 mm, 0.7 mm, 0.8 mm, 0.94 mm, 1 mm, 1.1 mm, 1.2 mm, 1.26 mm, 1.3 mm, 1.4 mm, 1.5 mm, 1.62 mm, 1.7 mm, 1.85 mm, 1.9 mm, 2 mm, 2.2 mm, 2.5 mm, 2.61 mm, 2.7 mm, 2.8 mm, 2.9 mm, and 3 mm.

In the present embodiment, the distance L is defined, so that the situation where leading to the electrode assembly is in contact with the top cover 002 due to a large size of the distance L is avoided, thereby the operation stability of the battery cell is ensured.

In addition, in reference to the foregoing description, it will be appreciated that in the process of pressing the end cap assembly into the housing, the electrode assembly is compressed by the lower plastic member 001, thereby a reaction force is applied to the lower plastic member 001 by the electrode assembly. The first surface 111 includes the avoidance groove 1111a, due to the reaction force of the electrode assembly on the lower plastic member 001, the periphery of the lower plastic member 001 is deformed towards the avoidance groove 1111a, thereby the lower plastic member 001 is avoided from being radially expanded due to compression, and thus the lower plastic member 001 is avoided from compressing the housing opening. Based on this, in case that the lower plastic member 001 is formed with the avoidance groove 1111a, the periphery of the lower plastic member 001 is deformed towards the avoidance groove 1111a without compressing the housing opening. Thus, an outer diameter of the lower plastic member 001 is equal to a diameter of the fitting surface 021, that is, an outer diameter of the lower plastic member 001 is equal to an inner diameter of the housing opening. Therefore, the distance L between the fitting surface 021 and the outer peripheral surface of the lower plastic member 001 is 0.

To further reduce the compression on the housing opening, for example, 0.1 mm ≤ L ≤ 2 mm. Further, 0.2 ≤ L ≤ 1 mm. Optionally, L = 0.4 mm.

Further, a coaxial tolerance A of the lower plastic member 001 and the top cover 002 satisfies: A ≤ L ≤ 3 mm.

For example, the coaxial tolerance satisfies: 0 ≤ A ≤ 0.3 mm. The coaxial tolerance A is, but is not limited to, 0.1 mm, 0.2 mm, and 0.3 mm. In case that A = 0.3 mm, 0.3 mm ≤ L ≤ 3 mm.

In the present embodiment, the distance L between the lower plastic member 001 and the top cover 002 is defined by the coaxial tolerance A between the lower plastic member 001 and the top cover 002. When an axial offset distance between the lower plastic member 001 and the top cover 002 reaches its maximum value (the maximum value of the axial offset distance is A), the outer periphery of the lower plastic member 001 is prevented from protruding beyond the fitting surface 021 of the top cover 002, which is beneficial for reducing the compression of the plastic member to the housing opening when the end cap assembly is pressed into the housing.

Accordingly, the present embodiment also provides a battery cell including the foregoing end cap assembly. For example, the battery cell is a cylindrical battery cell. It will be appreciated that the battery cell further includes a housing, a lower cap assembly, an electrode assembly, a positive collection plate and a negative collection plate. The housing has a first opening and a second opening that are arranged opposite to each other. The end cap assembly covers the first opening and the lower cover assembly covers the second opening. The electrode assembly is arranged in the housing, and a positive tab of the electrode assembly is connected to the positive electrode column 005 of the top cover 002 through the positive collection plate, and a negative tab of the electrode assembly is connected to the lower cover assembly through a negative connection plate.

## Claims

1. A lower plastic member (001) for a battery cell, the battery cell comprising a top cover (002), **characterized in that** the lower plastic member (001) comprises:
a body (011) comprising a first surface (111) and a second surface (112) arranged opposite to each other, wherein the first surface (111) is flat and arranged to be fitted with the top cover.

2. The lower plastic member (001) according to claim 1, wherein one or more through holes (117) penetrating through the first surface (111) and the second surface (112) are formed in the body (011).

3. The lower plastic member (001) according to claim 2, wherein the lower plastic member (001) further comprises one or more first adhesive layers (012), each of the first adhesive layers (012) is arranged at the first surface (111) and surrounds a periphery of each of the through holes (117), and two sides of each of the first adhesive layers (012) are configured to be glued to the top cover (002) and the body (011).

4. The lower plastic member (001) according to claim 3, wherein one or more first annular grooves (1111) are formed at the first surface (111) and surround the through holes (117), each of the first adhesive layers (012) is arranged in one of the first annular grooves (1111), and a side, away from the second surface (112), of the first adhesive layer (012) is coplanar with the first surface (111);
optionally, wherein in a thickness direction of the lower plastic member (001), a cross section of each of the first annular grooves (1111) is in a shape of any one of the following: a semicircle, a letter V, a letter U, and a rectangle.

5. The lower plastic member (001) according to claim 4, wherein a distance D between the first surface (111) and the second surface (112), and a depth d₁ of each of the first annular grooves (1111) satisfies: 10%D ≤ d₁ ≤ 50%D;
optionally, wherein a diameter D₀ of the lower plastic member (001), and a width dimension W₁ of each of the first annular grooves (1111) in a radial direction of the lower plastic member (001) satisfies: 1.5%D₀ ≤ W₁ ≤ 6.5%D₀;
optionally, wherein a distance S between an inner periphery of each of the first annular grooves (1111) and a periphery of each of the through holes (117) surrounded by the first annular groove (1111) satisfies: 1 mm ≤ S ≤ 5 mm.

6. The lower plastic member (001) according to any one of claims 1 to 5, wherein the lower plastic member (001) further comprises a second adhesive layer (013) arranged around a periphery of the first surface (111), and two sides of the second adhesive layer (013) are configured to be glued to the top cover (002) and the body (011);
optionally, wherein a second annular groove (1112) is arranged around the periphery of the first surface (111), the second adhesive layer (013) is arranged in the second annular groove (1112), and a side, away from the second surface (112), of the second adhesive layer (013) is coplanar with the first surface (111);
optionally, wherein in a thickness direction of the lower plastic member (001), a cross section of the second annular groove (1112) is in a shape of any one of the following: a semicircle, a letter V, a letter U, and a rectangle.

7. The lower plastic member (001) according to claim 6, wherein a distance D between the first surface (111) and the second surface (112), and a depth d₂ of the second annular groove (1112) satisfies: 10%D ≤ d₂ ≤ 50%D;
optionally, wherein a diameter D₀ of the lower plastic member (001), and a width dimension W₂ of the second annular groove (1112) in a radial direction of the lower plastic member (001) satisfies: 1.5%D₀ ≤ W₂ ≤ 6.5%D₀.

8. The lower plastic member (001) according to any one of claims 1 to 7, wherein one or more positioning ribs (114) are arranged on the second surface (112), and the positioning ribs (114) are arranged to be snap-fitted with a collection plate of the battery cell;
optionally, wherein an avoidance groove (1111a) is formed along a periphery of the first surface (111), and the avoidance groove (1111a) extends at least along a part of the periphery of the first surface (111);
optionally, wherein the avoidance groove (1111a) is configured as an annular groove.

9. The lower plastic member (001) according to claim 8, wherein the avoidance groove (1111a) comprises a first groove wall and a second groove wall, a side of the first groove wall is connected to the first surface (111), another side of the first groove wall is connected to a side of the second groove wall, and another side of the second groove wall is connected to an outer peripheral surface of the body (011);
optionally, wherein at least one of the following is rounded: a connection part between the first surface (111) and the first groove wall, a connection part between the first groove wall and the second groove wall, and a connection part between the second groove wall and the outer peripheral surface of the body (011).

10. The lower plastic member (001) according to claim 8 or 9, wherein a first dimension B of the avoidance groove (1111a) in a radial direction of the lower plastic member (001) satisfies: 0 < B ≤ 2 mm;
optionally, wherein a second dimension C of the avoidance groove (1111a) in an axial direction of the lower plastic member (001) satisfies: 0 < C ≤ 2 mm.

11. The lower plastic member (001) according to claim 8 or 9, wherein a guide rib (115) is arranged on the second surface (112) along a periphery of the body (011), an outer peripheral surface of the guide rib (115) is configured as a conical surface (121), and an end with a large diameter of the conical surface (121) is connected to the second surface (112);
optionally, wherein an inclination angle E of the conical surface (121) satisfies: 5° ≤ E ≤ 60°.

12. The lower plastic member (001) according to claim 11, wherein an end, close to the body (011), of the guide rib (115) at least partially forms a groove wall of the avoidance groove (1111a);
optionally, wherein the second surface (112) is coplanar with the end, close to the body (011), of the guide rib (115);
optionally, wherein a plurality of reinforcing ribs (113) are arranged on the second surface (112);
optionally, wherein the plurality of the reinforcing ribs (113) are arranged at intervals along a periphery of the lower plastic member (001).

13. The lower plastic member (001) according to claim 12, wherein the reinforcing ribs (113) comprise a first rib (1131) and a second rib (1132); the first rib (1131) is arranged to extend along a radial direction of the lower plastic member (001); the second rib (1132) is in a shape of an arc, an inwardly recessed surface of the second rib (1132) faces towards an axial direction of the lower plastic member (001), and an outwardly protruding surface of the second rib (1132) is connected to an end, close to the axial direction of the lower plastic member (001), of the first rib (1131).

14. An end cap assembly (100), **characterized in that** the end cap assembly (100) comprises a top cover (002), an upper plastic member (003), a terminal (004), an electrode column (005), and a lower plastic member (001) according to any one of claims 1-13,
wherein the first surface (111) is in contact with a side of the top cover (002), and the upper plastic member (003) is in contact with another side of the top cover (002); the terminal (004) is arranged on a side, away from the top cover (002), of the upper plastic member (003); an end of the electrode column (005) passes through the lower plastic member (001), the top cover (002), and the upper plastic member (003) in sequence, and is connected to the terminal (004).

15. The end cap assembly (100) according to claim 14, wherein a fitting surface (021) is formed on the top cover (002), a distance L between the fitting surface (021) and an outer peripheral surface of the lower plastic member (001) satisfies: 0 ≤ L ≤ 3 mm;
optionally, wherein a coaxial tolerance A between the lower plastic member (001) and the top cover (002) satisfies: A ≤ L ≤ 3 mm; and
optionally, wherein a coaxial tolerance A satisfies: 0 ≤ A ≤ 0.3 mm.
